# FASCICULE DE BREVET EUROPEEN

(11) **EP 3 375 674 B1**
(45) Date de publication et mention de la délivrance du brevet: **16.12.2020**
(21) Numéro de dépôt: 18160665.8
(22) Date de dépôt: 08.03.2018
(51) Int. Cl.: B60S 1/40

(54) **DISPOSITIF DE CONNEXION D'UN BALAI D'ESSUIE-GLACE À UN BRAS D'ENTRAÎNEMENT**
VORRICHTUNG ZUR VERBINDUNG EINES WISCHERBLATTS MIT EINEM SCHEIBENWISCHERARM
DEVICE FOR CONNECTING A WINDSCREEN WIPER BLADE TO A DRIVE ARM

(30) Priorité: 17.03.2017 FR 1752194
(43) Date de publication de la demande: 19.09.2018
(73) Titulaire: Valeo Systèmes d'Essuyage, 78322 Le Mesnil Saint Denis (FR)
(72) Inventeur: HOUSSAT, Stéphane, 63500 ISSOIRE (FR); GAUCHER, Vincent, 63500 ISSOIRE (FR); MOULEYRE, Guillaume, 63500 ISSOIRE (FR)
(74) Mandataire: Valeo Vision

(56) Documents cités:
- EP-A2- 2 465 739
- FR-A1- 2 830 823
- FR-A1- 2 902 394
- FR-A1- 2 917 693
- US-A1- 2014 259 505
- US-A1- 2015 246 659

## Description

### DOMAINE TECHNIQUE

La présente invention concerne notamment un dispositif de connexion d'un balai d'essuie-glace à un bras d'entraînement, en particulier de véhicule automobile.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entraînement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée *"flat blade"* (pour "balai plat"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un dispositif de connexion (dispositif de connexion « bras-balai ») comportant un adaptateur et un connecteur. Le connecteur est une pièce qui est solidarisée au balai et qui peut être intégré au balai. Le connecteur est fixé directement sur la lame racleuse ou sur le balai plat, alors que l'adaptateur est solidaire du bras. L'adaptateur est une pièce intermédiaire qui permet la liaison et la fixation du connecteur sur le bras d'entraînement. Il est configuré pour coopérer avec une tête ou pièce terminale du bras d'entraînement.

Le connecteur et l'adaptateur comprennent chacun des moyens d'articulation configurés pour coopérer avec des moyens complémentaires de l'autre organe, pour définir au moins un axe transversal de pivotement du connecteur vis-à-vis de l'adaptateur, qui est un axe de pivotement du balai vis-à-vis du bras. Dans la technique actuelle, l'un des organes, tel que le connecteur, comprend en général un axe physique sensiblement cylindrique qui définit l'axe d'articulation et qui est reçu dans un logement de forme complémentaire de l'autre organe.

Dans certains cas, l'adaptateur est monté dans un logement du connecteur ou du balai et comprend deux parois sensiblement parallèles et à distance l'une de l'autre, reliées ensemble par au moins un élément de liaison. Les parois de l'adaptateur comportent des faces latérales internes entre lesquelles s'étend cet élément de liaison, et des faces latérales externes qui sont destinées à être situées en regard de faces latérales internes du logement du connecteur ou du bras, et à coopérer par glissement avec ces faces lors du pivotement de l'adaptateur vis-à-vis du connecteur ou du balai.

L'adaptateur peut en outre comporter un élément de butée qui est porté par l'une de ses parois latérales et qui est au moins en partie en saillie vis-à-vis de la face latérale externe de cette paroi. Le brevet FR2902394 montre un tel élément de butée. Lorsque l'adaptateur est monté dans le logement du connecteur, il est apte à tourner autour de l'axe d'articulation précité. L'élément de butée de l'adaptateur est destiné à coopérer avec le connecteur pour limiter la course de l'adaptateur autour de cet axe à un débattement angulaire déterminé. Ceci permet à l'adaptateur de conserver une position facilitant le montage de l'adaptateur sur le bras d'entraînement. La coopération entre l'élément de butée et le connecteur n'est donc recherchée que pour aider l'utilisateur au montage de l'adaptateur et donc en général du balai. Il n'est en général pas utilisé lors du fonctionnement du balai.

Il est également connu d'équiper un dispositif de connexion bras-balai d'un capot, par exemple pour améliorer l'esthétique du dispositif. Un tel capot peut également être utilisé pour garantir un verrouillage de la connexion bras-balai et garantir ainsi cette connexion lors de l'essuyage d'une vitre. Le capot est en général mobile depuis une première position dans laquelle il autorise la connexion de l'adaptateur au bras, et une seconde position dans laquelle il verrouille la connexion bras-balai et empêche une désolidarisation involontaire du bras vis-à-vis du balai, en particulier en utilisation.

Le document FR 2 830 823 A1 montre un dispositif de connexion d'un balai d'essuie-glace à un bras d'entraînement selon le préambule de la première revendication.

L'invention propose un perfectionnement à cette technologie.

### EXPOSE DE L'INVENTION

L'invention propose à cet effet un dispositif de connexion d'un balai d'essuie-glace à un bras d'entraînement, comportant :
- un connecteur configuré pour être solidarisé audit balai et comportant des premiers moyens d'articulation,
- un adaptateur configuré pour être solidarisé audit bras et comportant des seconds moyens d'articulation configurés pour coopérer avec lesdits premiers moyens d'articulation afin de définir un premier axe de pivotement de l'adaptateur vis-à-vis du connecteur, qui est un axe de pivotement dudit balai vis-à-vis dudit bras, et
- un capot configuré pour être fixé sur le connecteur, ledit capot étant mobile depuis une première position dans laquelle il autorise une connexion dudit adaptateur audit bras, et une seconde position dans laquelle il verrouille ladite connexion, ledit capot est configuré pour, lorsqu'il est dans sa position de verrouillage, autoriser le déplacement dudit adaptateur autour dudit premier axe, et
ledit adaptateur est configuré pour adopter :
- au moins une position de libération dans laquelle ledit capot peut être déplacé entre ses première et seconde positions, et
- au moins une position de verrouillage dans laquelle ledit adaptateur est apte à coopérer par butée avec ledit capot afin de limiter la course de déplacement du capot depuis sa seconde position, et l'empêcher ainsi d'atteindre sa première position.

On comprend ainsi que, lorsque l'adaptateur est dans la position de verrouillage, le capot ne peut pas atteindre sa position dans laquelle le montage/démontage du bras vis-à-vis de l'adaptateur est possible. La position de verrouillage de l'adaptateur se traduit donc par un verrouillage de la connexion bras-balai et assure une garantie supplémentaire à ce sujet. Comme on l'a vu dans ce qui précède, la première sécurité est fournie par le capot lui-même. Toutefois, lorsqu'il est détérioré ou mal positionné, l'invention assure la sécurisation de la connexion bras-balai et fournit donc une redondance de verrouillage de la connexion bras-balai.

Le dispositif selon l'invention peut comprendre une ou plusieurs des caractéristiques suivantes, prises isolément les unes des autres ou en combinaison les unes avec les autres :
- ledit adaptateur comprend deux parois sensiblement parallèles entre elles et perpendiculaires audit premier axe, lesdites parois comportant des premières faces latérales internes entre lesquelles s'étend au moins un élément de liaison, et des faces latérales externes, ledit adaptateur comportant en outre au moins un élément de butée qui est porté par l'une desdites parois et qui est au moins en partie en saillie vis-à-vis de ladite face latérale externe de cette paroi, ledit au moins un élément de butée étant configuré, lorsque ledit adaptateur est dans ladite au moins une position de verrouillage, à coopérer par butée avec ledit capot afin de limiter sa course de déplacement depuis sa seconde position, et l'empêcher ainsi d'atteindre sa première position ;
- ledit élément est formé d'une seule pièce avec ladite paroi ;
- ledit capot comprend deux parois sensiblement parallèles entre elles et perpendiculaires audit premier axe, ledit capot comportant en outre au moins une fente située sur l'une desdites parois et qui est configurée pour, lorsque ledit capot est dans sa seconde position, autoriser le passage à travers elle dudit élément de butée dudit adaptateur ;
- ladite fente est obtenue par une diminution locale d'épaisseur de ladite paroi ou d'un rebord de ladite paroi ;
- lesdites parois comportent des premières faces latérales internes sensiblement en regard et des faces latérales externes, ladite fente s'étendant au moins en partie dans la face latérale interne de ladite paroi ;
- ledit capot est monté pivotant sur ledit connecteur, et mobile par pivotement autour d'un second axe entre lesdites première et seconde positions ;
- lesdits premier et second axes sont sensiblement parallèles ;
- ledit capot est configuré pour recouvrir au moins en partie ledit adaptateur et/ou ledit connecteur ;
- ledit capot comporte une ouverture configurée pour être traversée par une portion dudit bras.

La présente invention concerne également un balai d'essuie-glace, le balai d'essuie-glace comprend ou porte un dispositif tel que décrit ci-dessus.

La présente invention concerne encore un bras d'essuie-glace, bras le d'essuie-glace comprend ou porte un dispositif tel que décrit ci-dessus.

Le bras est par exemple un bras crochet, qui est monté entre les parois latérales de l'adaptateur.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective éclatée d'un balai d'essuie-glace, ce balai d'essuie-glace étant équipé d'un dispositif de connexion à un bras d'entraînement partiellement représenté,
- la figure 2 est une vue schématique en perspective et à plus grande échelle du dispositif de connexion de la figure 1, comportant un connecteur et un adaptateur monté ici sur une extrémité du bras d'entrainement,
- la figure 3 est une autre vue schématique en perspective de l'adaptateur de la figure 2,
- la figure 4 est une vue schématique en perspective éclatée d'un dispositif de connexion selon l'invention,
- les figures 5 à 7 sont des vues schématiques en perspective d'un capot du dispositif de connexion de la figure 4,
- la figure 8 est une vue schématique en perspective du dispositif de la figure 4 et illustre une première position de son capot,
- les figures 9 et 10 sont des vues schématiques en perspective du dispositif de la figure 4 et illustrent une seconde position de son capot,
- la figure 11 est une vue schématique en perspective du dispositif de la figure 4 et illustre l'adaptateur dans une position de libération, et
- la figure 12 est une vue schématique en perspective du dispositif de la figure 4 et illustre l'adaptateur dans une position de verrouillage.

### DESCRIPTION DETAILLEE

Il faut noter que les figures exposent l'invention de manière détaillée pour mettre en œuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure (ou arrière) ou intérieure (ou avant) s'apprécient par rapport au point de fixation du balai sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuie-glace, la dénomination inférieure contenant le plan du pare-brise.

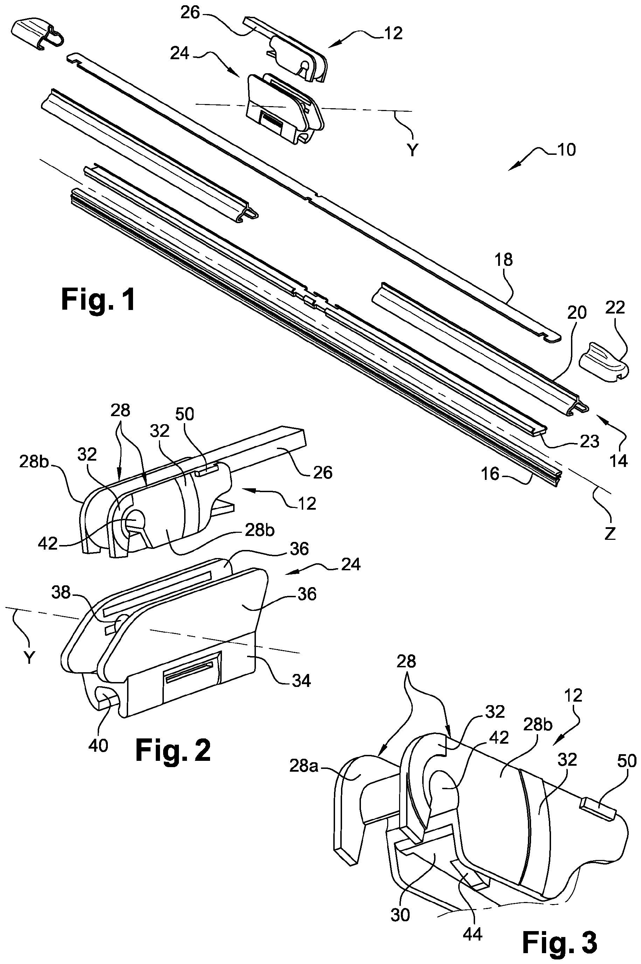

Il est illustré à la figure 1 un balai d'essuie-glace 10 équipé d'un dispositif de connexion comportant un adaptateur 12 et un connecteur 24.

Le balai 10 est du type balai plat dans l'exemple représenté et comprend un corps longitudinal 14, une lame d'essuyage 16, en général en caoutchouc, et au moins une vertèbre 18 qui rigidifie la lame et favorise son application sur une vitre telle qu'un pare-brise de véhicule.

Le corps 14 du balai 10 peut comporter un déflecteur aérodynamique supérieur 20 destiné à améliorer le fonctionnement du système d'essuyage, le but de ce déflecteur étant d'améliorer le plaquage du balai sur le pare-brise et donc la performance aérodynamique de l'essuie-glace.

Le balai 10 peut comprendre en outre des embouts d'extrémité 22 ou agrafes d'accrochage de la lame 16 et de la vertèbre 18 sur le corps 14, ces embouts 22 étant situés à chacune des extrémités longitudinales du corps 14.

Le balai 10 comprend également un élément 23 de fixation de la lame 16, qui est logé dans le corps 14.

Le balai 10 comprend sensiblement en son milieu le connecteur 24 qui est destiné à recevoir l'adaptateur 12, l'ensemble connecteur-adaptateur formant le dispositif de connexion du balai 10 au bras d'entraînement 26. Le bras 26 est ici partiellement représenté, seule son extrémité libre de liaison à l'adaptateur 12 étant visible.

L'adaptateur 12 est monté sur le connecteur 24 de façon à garder un degré de liberté en pivotement autour d'un axe d'articulation Y qui est un axe transversal sensiblement perpendiculaire à l'axe longitudinal Z du balai 10. Ce degré de liberté autorise un pivotement du balai 10 vis-à-vis du bras 26 et permet ainsi au balai de suivre la courbure du pare-brise lors de ses déplacements.

Le bras 26, mieux visible à la figure 2, est destiné à être entraîné par un moteur pour suivre un mouvement angulaire de va-et-vient permettant d'évacuer l'eau et éventuellement d'autres éléments indésirables recouvrant le pare-brise. Son extrémité libre de liaison à l'adaptateur 12 forme un crochet en U dans l'ouverture duquel est destiné à être monté l'adaptateur 12.

L'adaptateur 12 comprend deux parois latérales parallèles 28 qui sont à distance l'une de l'autre et reliées ensemble par au moins une paroi transversale 30 (figure 3). Les parois 28 comportent des faces latérales internes 28a entre lesquelles s'étend la paroi transversale 30, et des faces latérales externes 28b comportant des motifs en saillie 32.

Le connecteur 24, mieux visible à la figure 2, comprend un socle 34 de forme sensiblement parallélépipédique surmonté de deux parois latérales 36 qui s'étendent dans le prolongement supérieur des faces latérales du socle et qui ont vocation à venir enserrer les parois latérales 28 de l'adaptateur une fois que ce dernier est encliqueté dans le connecteur 24.

L'écartement entre les parois 36 du connecteur 24 est en conséquence légèrement supérieur à celui existant entre les faces latérales externes 28b de l'adaptateur. Entre les deux parois 36 s'étend un axe transversal 38 définissant l'axe Y et autour duquel l'adaptateur 12 a vocation à tourner dans des limites angulaires prédéfinies. Enfin, la partie inférieure du socle 34 est découpée d'une rainure 40 de montage du reste du balai 10, et en particulier de l'élément de fixation 23.

La figure 3 montre d'autres détails de l'adaptateur 12 et en particulier de sa paroi transversale 30. A son extrémité externe, la paroi 30 se prolonge longitudinalement par une goulotte 42 semi-cylindrique de révolution destinée à recevoir l'axe transversal 38 du connecteur lors de l'encliquetage de celui-ci sur l'adaptateur. Pour assurer cet encliquetage, l'ouverture de la goulotte 42 est légèrement inférieure à 180°, de façon qu'il faille exercer une force pour faire entrer l'axe 38 dans la goulotte 42.

Sur la figure 3 est également visible un ergot 44 positionné sur la paroi transversale 30, qui permet, en coopération avec un orifice (non représenté) pratiqué dans l'extrémité libre en forme de U du bras 26, de solidariser ce dernier avec l'adaptateur 12.

Le montage de l'adaptateur 12 peut être réalisé de la façon suivante. Il est inséré entre les parois 36 du connecteur 24 jusqu'à ce que l'axe 38 s'encliquète dans la goulotte 42 de l'adaptateur, puis le bras 26 est engagé sur l'adaptateur de façon à ce que son extrémité libre obture l'ouverture de la goulotte 42 (figure 2) et empêche la désolidarisation de l'adaptateur du connecteur.

Les motifs en saillie 32 des faces externes 28b de l'adaptateur 12 ont pour fonction de coopérer par glissement avec les faces internes en regard des parois 36 du connecteur, afin notamment de guider le pivotement autour de l'axe Y du balai 10 vis-à-vis du bras 26 en fonctionnement.

L'adaptateur 12 comprend en outre un élément de butée 50 visible aux figures 2 et 3. Cet élément de butée 50 est situé sur une des parois latérales 28 de l'adaptateur et est en saillie sur la face externe 28b de cette paroi. Il a une forme générale parallélépipédique dont l'épaisseur ou dimension transversale, mesurée dans une direction parallèle à l'axe Y, est supérieure à celle des motifs 32.

En position de montage et d'encliquetage de l'adaptateur 12 dans le connecteur 24, l'élément de butée 50 est apte à coopérer par butée avec le bord longitudinal supérieur d'une des parois latérales 36 du connecteur 24, afin de limiter le débattement angulaire de l'adaptateur autour de l'axe Y vis-à-vis du connecteur, dans au moins un sens (par exemple horaire).

L'élément en saillie 50 est fixe et formé d'une seule pièce avec l'adaptateur 12.

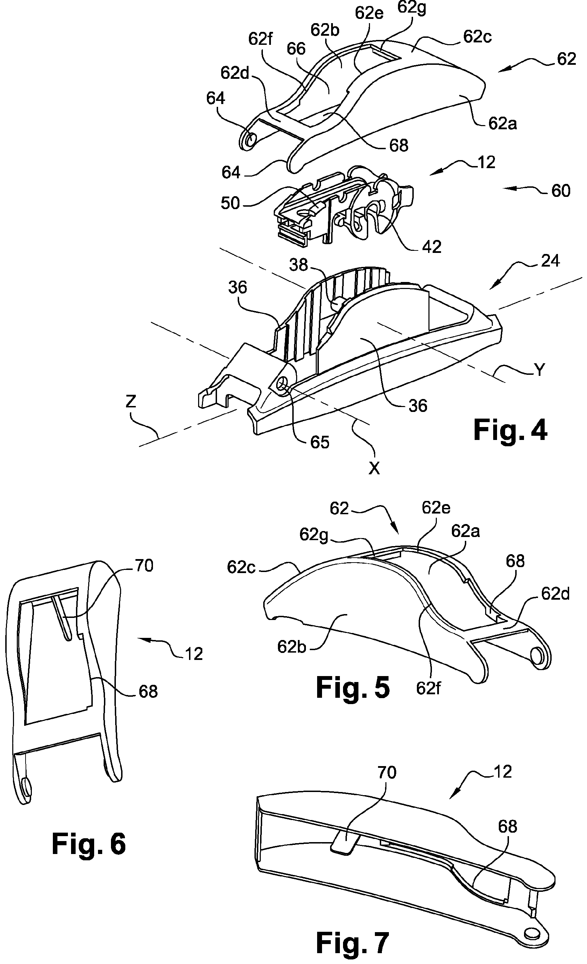

Les figures 4 et suivantes illustrent un mode de réalisation d'un dispositif de connexion 60 selon l'invention, qui comprend un capot 62 en plus d'un adaptateur 12 et d'un connecteur 24.

L'adaptateur 12 et le connecteur 24 des figures 4 et suivantes peuvent être considérés comme comportant toutes les caractéristiques de l'adaptateur 12 et du connecteur 24 des figures 1 à 3. Des mêmes références sont donc utilisées pour désigner ces pièces ainsi que leurs différentes parties.

Dans l'exemple de réalisation représenté, le capot 62 est monté sur le connecteur 24. Il est articulé vis-à-vis du connecteur 24 autour d'un axe X sensiblement perpendiculaire à l'axe Y.

Le capot 62 a une forme générale allongée le long de l'axe longitudinal Z du balai et comprend des moyens d'articulation autour de l'axe X à l'une de ses extrémités longitudinales.

Plus précisément, le capot 62 comprend ici deux parois latérales 62a, 62b sensiblement planes et parallèles entre elles et à l'axe longitudinal Z. Elles sont à distance l'une de l'autre et reliées ensemble par des parois supérieures 62c, 62d.

Une première paroi supérieure 62c, dite extérieure, s'étend entre les bords supérieurs des parois 62a, 62b et depuis l'extrémité longitudinale extérieure du capot, sur une dimension longitudinale correspondant à environ 30 à 50% par exemple de la dimension longitudinale totale du capot.

Une seconde paroi supérieure 62d, dite intérieure, s'étend entre les bords supérieurs des parois 62a, 62b et au voisinage de l'extrémité longitudinale intérieure du capot. Elle a une ici une faible dimension longitudinale correspondant par exemple à au plus 10% de la dimension longitudinale totale du capot.

Le capot 62 comprend au niveau de son extrémité longitudinale intérieure, sur les faces internes en regard des parois latérales 62a, 62b, respectivement deux plots cylindriques 64 en saillie. Les plots 64 sont coaxiaux et définissent l'axe X de pivotement du capot. Ils sont destinés à coopérer par encliquetage élastique avec des évidements 65 complémentaires du connecteur 24, lors du montage du capot sur le connecteur, et par glissement, lors du pivotement du capot relativement au connecteur.

Les parois supérieures 62c, 62d définissent entre elles une ouverture 66 du capot qui est destinée à être traversée par le bras lors de sa liaison à l'adaptateur 12, et en position d'utilisation du balai d'essuie-glace.

Au niveau de cette ouverture 66, les bords supérieurs des parois latérales 62a, 62b comprennent des rebords périphériques 62e, 62f en regard. Ainsi, la paroi 62a comprend à son bord supérieur un rebord 62e qui est orienté dans l'ouverture 66 vers la paroi 62b. La paroi 62b comprend à son bord supérieur un rebord 62f qui est orienté dans l'ouverture 66 vers la paroi 62a.

Du fait de la forme ou du profil des bords supérieurs des parois 62a, 62b, chaque rebord 62e, 62f a ici une forme générale en S. chaque rebord présente une double incurvation. Chaque rebord 62e, 62f présente une incurvation concave orientée vers le haut au voisinage de l'extrémité intérieure du capot, et une incurvation convexe orientée vers le haut au voisinage de l'extrémité extérieure du capot.

Le rebord 62f de la paroi 62b a une épaisseur ou dimension mesurée le long de l'axe X, qui est constante sur toute sa longueur (c'est-à-dire sur toute la dimension du rebord le long de l'axe Z). Au contraire, le rebord 62e de la paroi 62a a une épaisseur ou dimension mesurée le long de l'axe X, qui varie sur sa longueur. Le rebord 62e a, au niveau de sa convexité orientée vers le haut, une épaisseur constante sensiblement égale à celle du rebord 62f. Le rebord 62e a, au niveau au niveau de son incurvation concave orientée vers le haut, une épaisseur plus faible que le reste du rebord 62e et plus faible que celle du rebord 62f. La réduction d'épaisseur du rebord 62e définit une fente 68 de passage de l'élément de butée 50 de l'adaptateur 12.

Le capot 62 est positionné sur le connecteur 24 et le recouvre au moins en partie. Le capot 62 peut également recouvrir une partie de l'adaptateur. Le capot 62 est ici apte à recouvrir les parois latérales 36 du connecteur, les faces latérales internes des parois latérales 62a, 62b du capot étant aptes à venir en regard des parois latérales 36 du connecteur. L'écartement entre les parois 62a, 62b du capot 62 est en conséquence légèrement supérieur à celui existant entre les faces latérales externes des parois latérales 36 du connecteur 24. Les parois latérales 36 peuvent avoir une conformation similaire à celle des parois 62a, 62b. En particulier, les bords supérieurs des parois 36 peuvent avoir une forme en S similaire à celle des bords supérieurs des parois 62a, 62b et leurs rebords 62e, 62f.

Le capot 62 comprend en outre sur une face inférieure de sa paroi supérieure 62c une patte en saillie 70 qui est apte à coopérer par butée, dans une direction parallèle à l'axe Z, avec l'extrémité libre du bras, lorsque ce dernier est relié à l'adaptateur 12, afin de verrouiller la connexion bras-balai (figures 6 et 7).

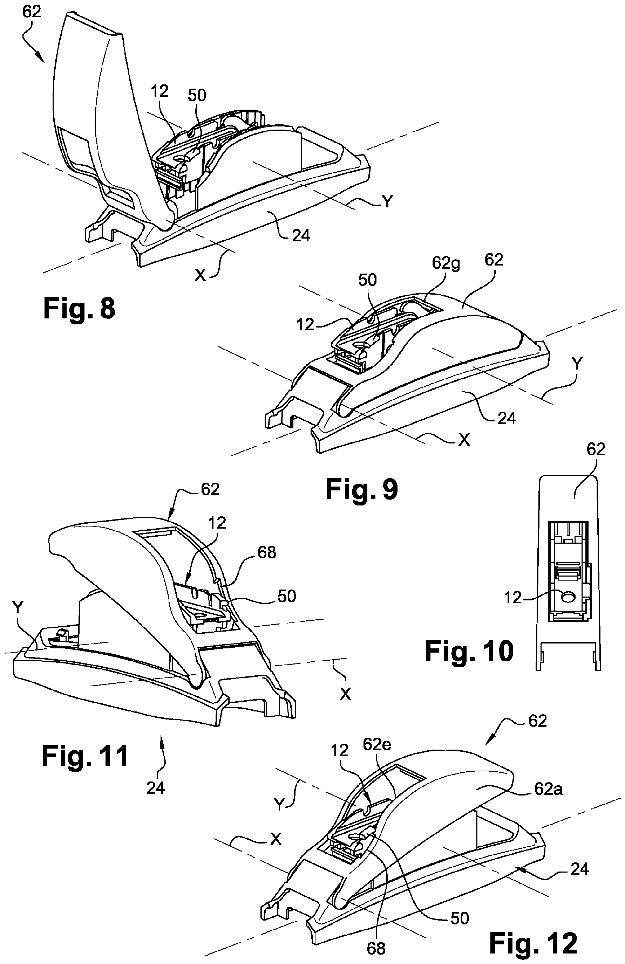

Le capot 62 est mobile autour de l'axe X depuis une position représentée dans la figure 8 dans laquelle il autorise la connexion du bras à l'adaptateur 12 qui est en effet libre d'accès, jusqu'à une position de fermeture représentée aux figures 9 et 10 dans laquelle il verrouille la connexion bras-balai. Dans cette dernière position, bien que le bras ne soit pas représenté, il traverse l'ouverture 66 du capot et s'étend sensiblement parallèlement à l'axe Z. Le bras peut coopérer par butée axiale avec la patte 70 du capot, ce qui empêche une désolidarisation accidentelle du bras vis-à-vis du balai.

La connexion bras-balai peut être réalisée de la façon suivante. Le balai est déplacé le long de l'axe Z en direction du bras de façon à ce que l'extrémité libre de ce dernier traverse l'ouverture 66 du capot, lorsque le capot est dans la position de la figure 8. L'extrémité libre du bras est alors montée sur l'adaptateur 12, qui peut être pivoté autour de l'axe Y pour faciliter ce montage. Le capot 62 est alors fermé, c'est-à-dire mis sa position des figures 9 et 10.

Le capot 62 peut adopter une multitude de positions intermédiaires entre les positions extrêmes précitées représentées aux figures 8 à 10.

L'adaptateur 12 est mobile autour de l'axe Y depuis une position de butée dans laquelle l'élément du butée 50 est en appui sur le bord supérieur de la paroi 36 du connecteur, par exemple au niveau de son incurvation concave, jusqu'à une position dans laquelle il prend appui sur le bord transversal 62g de la paroi supérieure 62c du capot 62. C'est le cas lorsque le capot 62 est dans sa position de fermeture (figures 9 et 10). Lorsque le capot 62 est dans sa position d'ouverture (figure 8), l'adaptateur 12 peut être déplacé depuis la position de butée jusqu'à une autre position de butée dans laquelle son élément de butée 50 est en appui sur le bord supérieur de la paroi 36 du connecteur, par exemple au niveau de sa convexité supérieure.

L'adaptateur 12 peut adopter une multitude de positions intermédiaires entre ces positions extrêmes.

Parmi ces positions intermédiaires, l'adaptateur 12 peut adopter au moins une position représentée à la figure 11 dans laquelle, lorsque le capot 62 est déplacé autour de l'axe X, il est déplacé sans difficulté entre ses positions extrêmes des figures 8 à 10. Lors de ces déplacements, l'élément de butée 50 passe à travers la fente 68 précitée du capot.

Parmi ces positions intermédiaires, l'adaptateur 12 peut en outre adopter au moins une position représentée à la figure 12 dans laquelle, lorsque le capot 62 est déplacé autour de l'axe X depuis sa position de fermeture, il est déplacé sur une course réduite car il vient en butée par le bord supérieur de sa paroi 62a ou par le rebord 62e de plus grande épaisseur de cette paroi 62a, sur l'élément de butée 50.

En pratique, si on considère par exemple que l'adaptateur 12 est mobile autour de l'axe Y sur environ 120°, lorsque le capot est en position de fermeture des figures 9 et 10 :
- toutes les positions de l'adaptateur entre la position de butée de l'élément 50 sur le connecteur 24, et une position dite de transition, sont telles que le capot est libre de se déplacer entre ses positions extrêmes, et
- toutes les positions de l'adaptateur entre la position de butée de l'élément 50 sur le capot 62, et la position dite de transition, sont telles que le capot n'est pas libre de se déplacer jusqu'à sa position de pleine ouverture de la figure 8.

La position de transition correspond par exemple à un angle de 30-40° mesuré depuis la position de butée sur le connecteur 24.

Avantageusement, une fois le capot 62 fermé, et le balai posé sur le pare-brise, l'apiquage fait pivoter l'adaptateur 12 et donc son élément de butée 50. Ce dernier ne se retrouve plus en regard de la fente 68, ce qui permet de bloquer le capot 62 en cas d'ouverture dans cette phase d'utilisation.

## Revendications

1. Dispositif (60) de connexion d'un balai d'essuie-glace (10) à un bras d'entraînement (26), comportant :
- un connecteur (24) configuré pour être solidarisé audit balai et comportant des premiers moyens d'articulation (38),
- un adaptateur (12) configuré pour être solidarisé audit bras et comportant des seconds moyens d'articulation (42) configurés pour coopérer avec lesdits premiers moyens d'articulation afin de définir un premier axe (Y) de pivotement de l'adaptateur vis-à-vis du connecteur, qui est un axe de pivotement dudit balai vis-à-vis dudit bras, et
- un capot (62) configuré pour être fixé sur le connecteur, ledit capot étant mobile depuis une première position dans laquelle il autorise une connexion dudit adaptateur audit bras, et une seconde position dans laquelle il verrouille ladite connexion,
ledit capot étant configuré pour, lorsqu'il est dans sa position de verrouillage, autoriser le déplacement dudit adaptateur autour dudit premier axe; le dispositif (60) étant **caractérisé en ce que** ledit adaptateur (12) est configuré pour adopter :
- au moins une position de libération dans laquelle ledit capot peut être déplacé entre ses première et seconde positions, et
- au moins une position de verrouillage dans laquelle ledit adaptateur est apte à coopérer par butée (50) avec ledit capot (62) afin de limiter la course de déplacement du capot depuis sa seconde position, et l'empêcher ainsi d'atteindre sa première position.

2. Dispositif (60) selon la revendication précédente, dans lequel ledit adaptateur (12) comprend deux parois (28) sensiblement parallèles entre elles et perpendiculaires audit premier axe, lesdites parois comportant des premières faces latérales internes entre lesquelles s'étend au moins un élément de liaison (30), et des faces latérales externes, ledit adaptateur comportant en outre au moins un élément de butée (50) qui est porté par l'une desdites parois et qui est au moins en partie en saillie vis-à-vis de ladite face latérale externe de cette paroi, ledit au moins un élément de butée étant configuré, lorsque ledit adaptateur est dans ladite au moins une position de verrouillage, à coopérer par butée avec ledit capot (62) afin de limiter sa course de déplacement depuis sa seconde position, et l'empêcher ainsi d'atteindre sa première position.

3. Dispositif (60) selon la revendication précédente, dans lequel ledit élément (50) est formé d'une seule pièce avec ladite paroi (28).

4. Dispositif (60) selon l'une des revendications 2 à 3, dans lequel ledit capot (62) comprend deux parois (62a, 62b) sensiblement parallèles entre elles et perpendiculaires audit premier axe (Y), ledit capot comportant en outre au moins une fente (68) située sur l'une (62a) desdites parois et qui est configurée pour, lorsque ledit capot est dans sa seconde position, autoriser le passage à travers elle dudit élément de butée (50) dudit adaptateur (12).

5. Dispositif (60) selon la revendication précédente, dans lequel ladite fente (68) est obtenue par une diminution locale d'épaisseur de ladite paroi (62a) ou d'un rebord (62e) de ladite paroi.

6. Dispositif (60) selon la revendication 4 ou 5, dans lequel lesdites parois (62a, 62b) comportent des premières faces latérales internes sensiblement en regard et des faces latérales externes, ladite fente (68) s'étendant au moins en partie dans la face latérale interne de ladite paroi.

7. Dispositif (60) selon l'une des revendications précédentes, dans lequel ledit capot (62) est monté pivotant sur ledit connecteur (24), et mobile par pivotement autour d'un second axe (X) entre lesdites première et seconde positions.

8. Dispositif (60) selon la revendication précédente, dans lequel lesdits premier et second axes (X, Y) sont sensiblement parallèles.

9. Dispositif (60) selon l'une des revendications précédentes, dans lequel ledit capot (62) est configuré pour recouvrir au moins en partie ledit adaptateur (12) et/ou ledit connecteur.

10. Dispositif (60) selon l'une des revendications précédentes, dans lequel ledit capot (62) comporte une ouverture (66) configurée pour être traversée par une portion dudit bras (26)

11. Balai (10) d'essuie-glace, **caractérisé en ce qu'**il comprend ou porte un dispositif (60) selon l'une des revendications précédentes.

12. Bras (26) d'essuie-glace (10), **caractérisé en ce qu'**il comprend ou porte un dispositif (60) selon l'une des revendications 1 à 10.

## Patentansprüche

1. Vorrichtung (60) zur Verbindung eines Scheibenwischerblattes (10) mit einem Antriebsarm (26), welche aufweist:
- einen Verbinder (24), der dafür ausgelegt ist, mit dem Wischerblatt fest verbunden zu werden, und erste Gelenkmittel (38) aufweist,
- einen Adapter (12), der dafür ausgelegt ist, mit dem Arm fest verbunden zu werden, und zweite Gelenkmittel (42) aufweist, die dafür ausgelegt sind, mit den ersten Gelenkmitteln zusammenzuwirken, um eine erste Schwenkachse (Y) des Adapters in Bezug auf den Verbinder zu definieren, welche eine Schwenkachse des Wischerblattes in Bezug auf den Arm ist, und
- eine Haube (62), die dafür ausgelegt ist, auf dem Verbinder befestigt zu werden, wobei die Haube zwischen einer ersten Position, in welcher sie eine Verbindung des Adapters mit dem Arm ermöglicht, und einer zweiten Position, in welcher sie diese Verbindung verriegelt, beweglich ist,
wobei die Haube dafür ausgelegt ist, wenn sie sich in ihrer Verriegelungsposition befindet, die Verlagerung des Adapters um die erste Achse zu ermöglichen;
wobei die Vorrichtung **dadurch gekennzeichnet ist, dass** der Adapter (12) dafür ausgelegt ist einzunehmen:
- wenigstens eine Freigabeposition, in welcher die Haube zwischen ihrer ersten und ihrer zweiten Position verlagert werden kann, und
- wenigstens eine Verriegelungsposition, in welcher der Adapter in der Lage ist, mit der Haube (62) mittels Anschlag (50) zusammenzuwirken, um den Weg der Verlagerung der Haube aus ihrer zweiten Position zu begrenzen und sie somit daran zu hindern, ihre erste Position zu erreichen.

2. Vorrichtung (60) nach dem vorhergehenden Anspruch, wobei der Adapter (12) zwei Wände (28) umfasst, die im Wesentlichen zueinander parallel und senkrecht zur ersten Achse sind, wobei die Wände erste innere Seitenflächen, zwischen denen sich wenigstens ein Verbindungselement (30) erstreckt, und äußere Seitenflächen aufweisen, wobei der Adapter außerdem wenigstens ein Anschlagelement (50) aufweist, welches von einer der Wände getragen wird und welches in Bezug auf die äußere Seitenfläche dieser Wand wenigstens teilweise vorspringt, wobei das wenigstens eine Anschlagelement dafür ausgelegt ist, wenn sich der Adapter in der wenigstens einen Verriegelungsposition befindet, mittels Anschlag mit der Haube (62) zusammenzuwirken, um ihren Weg der Verlagerung aus ihrer zweiten Position zu begrenzen und sie somit daran zu hindern, ihre erste Position zu erreichen.

3. Vorrichtung (60) nach dem vorhergehenden Anspruch, wobei das Element (50) mit der Wand (28) aus einem Stück ausgebildet ist.

4. Vorrichtung (60) nach einem der Ansprüche 2 bis 3, wobei die Haube (62) zwei Wände (62a, 62b) umfasst, die im Wesentlichen zueinander parallel und senkrecht zur ersten Achse (Y) sind, wobei die Haube außerdem wenigstens einen Spalt (68) aufweist, der sich an einer (62a) der Wände befindet und der dafür ausgelegt ist, wenn sich die Haube in ihrer zweiten Position befindet, die Hindurchbewegung des Anschlagelements (50) des Adapters (12) durch sie zu ermöglichen.

5. Vorrichtung (60) nach dem vorhergehenden Anspruch, wobei der Spalt (68) durch eine lokale Verringerung der Dicke der Wand (62a) oder eines umgebogenen Randes (62e) der Wand erhalten wird.

6. Vorrichtung (60) nach Anspruch 4 oder 5, wobei die Wände (62a, 62b) erste innere Seitenflächen, die im Wesentlichen einander gegenüberliegen, und äußere Seitenflächen aufweisen, wobei sich der Spalt (68) wenigstens teilweise in der inneren Seitenfläche der Wand erstreckt.

7. Vorrichtung (60) nach einem der vorhergehenden Ansprüche, wobei die Haube (62) schwenkbar auf dem Verbinder (24) angebracht ist und durch Schwenkung um eine zweite Achse (X) zwischen der ersten und der zweiten Position beweglich ist.

8. Vorrichtung (60) nach dem vorhergehenden Anspruch, wobei die erste und die zweite Achse (X, Y) im Wesentlichen parallel sind.

9. Vorrichtung (60) nach einem der vorhergehenden Ansprüche, wobei die Haube (62) dafür ausgelegt ist, den Adapter (12) und/oder den Verbinder wenigstens teilweise zu bedecken.

10. Vorrichtung (60) nach einem der vorhergehenden Ansprüche, wobei die Haube (62) eine Öffnung (66) umfasst, die dafür ausgelegt ist, von einem Abschnitt des Armes (26) durchquert zu werden.

11. Scheibenwischerblatt (10), **dadurch gekennzeichnet, dass** es eine Vorrichtung (60) nach einem der vorhergehenden Ansprüche umfasst oder trägt.

12. Arm (26) eines Scheibenwischers (10), **dadurch gekennzeichnet, dass** er eine Vorrichtung (60) nach einem der Ansprüche 1 bis 10 umfasst oder trägt.

## Claims

1. Device (60) for connecting a windscreen wiper blade (10) to a drive arm (26), having:
- a connector (24) that is configured to be secured to said blade and has first articulation means (38),
- an adapter (12) that is configured to be secured to said arm and has second articulation means (42) that are configured to cooperate with said first articulation means in order to define a first axis (Y) about which the adapter pivots with respect to the connector, which is an axis about which said blade pivots with respect to said arm, and
- a cover (62) that is configured to be attached to the connector, said cover being able to move from a first position in which it enables said adapter to be connected to said arm, and a second position in which it locks said connection,
said cover being configured, when it is in its locking position, to enable said adapter to move about said first axis;
the device (60) being **characterized in that** said adapter (12) is configured to adopt:
- at least one release position in which said cover can be moved between its first and second positions, and
- at least one locking position in which said adapter is able to cooperate by abutment (50) with said cover (62) in order to limit the travel of the cover from its second position, and thus prevent it from reaching its first position.

2. Device (60) according to the preceding claim, in which said adapter (12) comprises two walls (28) that are substantially parallel to one another and perpendicular to said first axis, said walls having first inner lateral faces between which at least one linking element (30) extends, and outer lateral faces, said adapter also having at least one stop element (50) that is borne by one of said walls and that at least partially projects with respect to said outer lateral face of this wall, said at least one stop element being configured, when said adapter is in said at least one locking position, to cooperate by abutment with said cover (62) in order to limit its travel from its second position, and thus prevent it from reaching its first position.

3. Device (60) according to the preceding claim, in which said element (50) is formed in one piece with said wall (28).

4. Device (60) according to one of Claims 2 to 3, in which said cover (62) comprises two walls (62a, 62b) that are substantially parallel to one another and perpendicular to said first axis (Y), said cover also having at least one slot (68) that is situated on one (62a) of said walls and that is configured, when said cover is in its second position, to enable said stop element (50) of said adapter (12) to pass through it.

5. Device (60) according to the preceding claim, in which said slot (68) is obtained by a local reduction in the thickness of said wall (62a) or of a lip (62e) of said wall.

6. Device (60) according to Claim 4 or 5, in which said walls (62a, 62b) have first inner lateral faces that are substantially opposite one another and outer lateral faces, said slot (68) at least partially extending in the inner lateral face of said wall.

7. Device (60) according to one of the preceding claims, in which said cover (62) is mounted so as to be able to pivot on said connector (24) and is able to move by pivoting about a second axis (X) between said first and second positions.

8. Device (60) according to the preceding claim, in which said first and second axes (X, Y) are substantially parallel.

9. Device (60) according to one of the preceding claims, in which said cover (62) is configured to at least partially cover said adapter (12) and/or said connector.

10. Device (60) according to one of the preceding claims, in which said cover (62) has an opening (66) that is configured to be passed through by a portion of said arm (26).

11. Windscreen wiper blade (10), **characterized in that** it comprises or bears a device (60) according to one of the preceding claims.

12. Arm (26) of a windscreen wiper (10), **characterized in that** it comprises or bears a device (60) according to one of Claims 1 to 10.
